# EUROPEAN PATENT SPECIFICATION

(11) **EP 2 279 635 B1**
(45) Date of publication and mention of the grant of the patent: **13.02.2013**
(21) Application number: 08873298.7
(22) Date of filing: 16.12.2008
(51) Int. Cl.: H04W 52/14, H04W 52/54, H04L 27/26, H04W 52/32, H04L 5/00

(54) **METHODS AND ARRANGEMENTS FOR UPLINK MULTICARRIER POWER CONTROL IN A WIRELESS COMMUNICATIONS SYSTEM**
VERFAHREN UND ANORDNUNGEN ZUR AUFWÄRTSSTRECKEN-MEHRTRÄGER-LEISTUNGSREGELUNG IN EINEM DRAHTLOSEN KOMMUNIKATIONSSYSTEM
PROCÉDÉS ET AGENCEMENTS DE COMMANDE DE PUISSANCE DE PORTEUSES MULTIPLES AMONT DANS UN SYSTÈME DE COMMUNICATIONS SANS FIL

(30) Priority: 13.03.2008 US 36133 P
(43) Date of publication of application: 02.02.2011
(73) Proprietor: Telefonaktiebolaget L M Ericsson (PUBL), 164 83 Stockholm (SE)
(72) Inventor: GERSTENBERGER, Dirk, S-113 56 Stockholm (SE); AXELSSON, Samuel, S-182 76 Stocksund (SE)
(74) Representative: Kühn, Friedrich Heinrich
(86) International application number: PCT/SE2008/051468
(87) International publication number: WO 2009/113934

(56) References cited:
- EP-A- 1 367 739
- WO-A-2006/020411
- US-A1- 2006 034 382
- US-A1- 2006 246 907
- 3GPP: "TS 25.214 v.8.0.0 Group Radio access network, physical layer procedures" 3GPP, 1 November 2007 (2007-11-01), XP002521671

## Description

### TECHNICAL FIELD

The present invention relates to the area of wireless communications, and especially to uplink power control in a multi-carrier Universal Mobile Telecommunication System. More specifically, the invention relates to a method of uplink power control in a radio base station and in a user equipment, as well as to a radio base station and a user equipment.

### BACKGROUND

The Universal Mobile Telecommunication System (UMTS), also referred to as the third generation (3G) system or the wideband code division multiplexing access (WCDMA) system, is designed to succeed GSM. UMTS Terrestrial Radio Access Network (UTRAN) is the radio access network of a UMTS system.

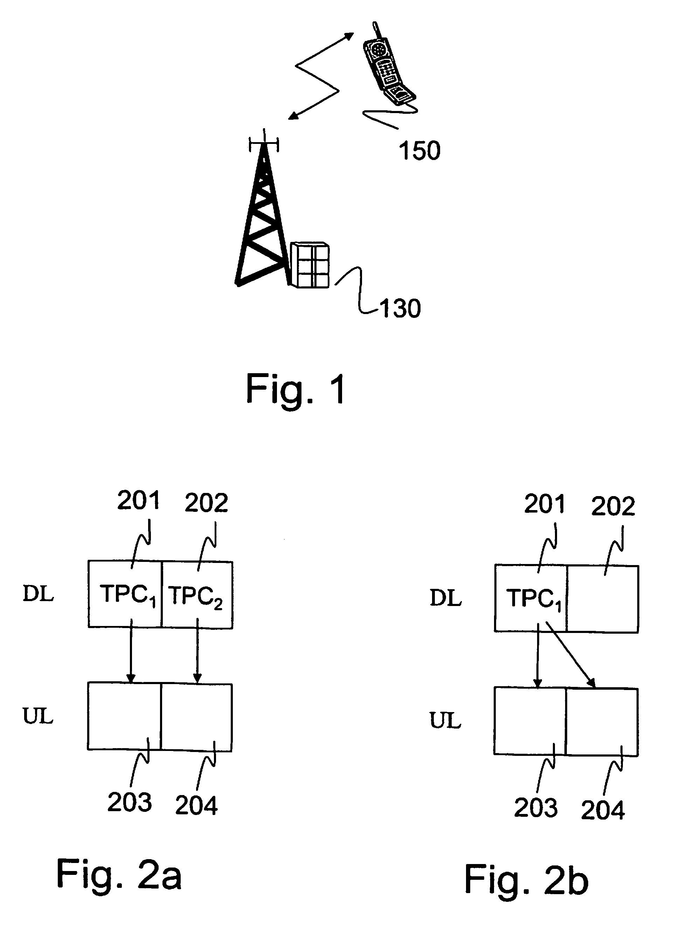

High-Speed Downlink Packet Access (HSPDA) is an evolution of UTRAN bringing further enhancements to the provisioning of packet-data services both in terms of system and end-user performance. The downlink packet-data enhancements of HSDPA are complemented with Enhanced Uplink (EUL), also known as High-Speed Uplink Packet Access (HSUPA). EUL provides improvements in the uplink capabilities and performance in terms of higher data rates, reduced latency, and improved system capacity, and is therefore a natural complement to HSDPA. HSDPA and EUL are often jointly referred to as High-Speed Packet Access (HSPA). In the HSPA architecture, a user equipment (UE) 150 is wirelessly connected to a radio base station, i.e. a NodeB 130, as illustrated in **figure 1****.**

The operation of WCDMA/HSPA on multiple 5MHz frequency blocks - so called carriers - used simultaneously for one given UE, is one further step of evolving WCDMA and HSPA. This mode of operation is often referred to as multi-carrier HSPA.

A multi-carrier connection with frequency division duplex (FDD) can be described as a set of downlink carriers linked to a set of uplink carriers for a given UE. The downlink carriers can be adjacent or non-adjacent in the frequency domain, and the same holds for the uplink carriers. More generally speaking, the carriers do not need to be in the same frequency band, and time division duplex (TDD) bands could also be used as part of the multi-carrier operation. The number of downlink carriers may also be different from the number of uplink carriers in a multi-carrier connection for a given UE. If there is one uplink carrier, the number of downlink carriers can for example be two or more. The opposite with more uplink carriers than downlink carriers is also possible. Hereinafter, the "multi-carrier symmetry" of a connection refers to the number of uplink and downlink carriers in the multi-carrier connection for a given UE.

Conventionally, one anchor carrier can be defined in uplink and one in downlink, in a multi-carrier connection. The remaining carriers (uplink and downlink) can then be referred to as non-anchor (NA) carriers. For example, most of the control signaling can be carried on the anchor carrier, while the non-anchor carriers carry only the data channels and necessary control signaling channels that cannot be carried on the anchor carrier.

In prior art, WCDMA/HSPA systems make use of a mechanism to control the uplink power, in which transmit power control (TPC) commands are defined by the NodeB based on measurements of the signals received from the UE. The TPC command can indicate either "up" corresponding to a power increase of e.g. 1dB, or "down" corresponding to a power decrease. The TPC commands are transmitted on the fractional downlink physical control channel (F-DPCH) in order for the UE to adjust the uplink transmit power. This mechanism is used both in soft handover and non-soft handover scenarios. In soft handover several radio base stations, i.e. NodeBs, are transmitting TPC commands to a single user equipment, so the user equipment needs to combine the different TPC commands according to a defined combination rule.

EP 1 367 739 A1 describes a method for transmission power control in a multicarrier radio system. Carriers of an uplink connection are divided into a plurality of groups. For each group, a control signal for transmission power control is transmitted in downlink direction. All control signals are described as being transmitted via the same control channel.

In a conventional multi-carrier HSPA system, there can be different multi-carrier symmetries with multiple downlink carriers and/or multiple uplink carriers for a given UE, as described above. The different carriers may use adjacent or non-adjacent frequency bands. A multi-carrier system also operates in soft handover scenarios. In all multi-carrier systems, there is a need to control the transmission power of the uplink carriers. Uplink power control mechanisms has to be defined, going beyond the mechanisms used in single-carrier systems with only one uplink and one downlink carrier, e.g. because channel conditions may differ between different (potentially non-adjacent) uplink carriers. Thus, there is a need to provide an efficient and reliable control of the uplink transmit power in a multi-carrier HSPA system, regardless of e.g. the multi-carrier symmetry and the used frequency bands for the different carriers.

### SUMMARY

The object of the present invention is to address the problem outlined above, and this object and others are achieved by the method and the arrangement according to the appended independent claims, and by the embodiments according to the dependent claims.

A basic concept of the invention is to adapt the TPC command mechanism for uplink transmit power control, used in single-carrier systems, to support different kinds of multi-carrier scenarios, including the different soft-handover scenarios.

Thus in accordance with a first aspect of the present invention, a method of uplink transmit power control in a radio base station of a multi-carrier wireless communication system is provided. The radio base station receives on N uplink carriers and transmits on M downlink carriers in the communication with at least one user equipment, where the sum of N and M is equal to or larger than three. The method is characterised by the step of defining at least one TPC command to be used by one of the user equipment for adjusting the transmit power of the N uplink carriers, the number of defined TPC commands being equal to or lower than N, and the step of transmitting the defined at least one TPC command on at least one of the M downlink carriers.

In accordance with a second aspect of the present invention, a method of uplink transmit power control in a user equipment of a multi-carrier wireless communication system is provided. The user equipment transmits on N uplink carriers and receives on M downlink carriers in the communication with at least one radio base station, where the sum of N and M is equal to or larger than three. The method is characterised by the step of receiving at least one TPC command on at least one of the M downlink carriers from at least one radio base station, the number of received TPC commands being equal to or lower than N, and the step of adjusting the transmit power of the N uplink carriers based on the received at least one TPC command.

In accordance with a third aspect of the present invention, a radio base station of a multi-carrier wireless communication system is provided. The radio base station is arranged to receive on N uplink carriers and transmit on M downlink carriers in the communication with at least one user equipment, where the sum of N and M is equal to or larger than three. The radio base station is characterised in that it comprises means for defining at least one TPC command to be used by one of the user equipment for adjusting the transmit power of the N uplink carriers, the number of defined TPC commands being equal to or lower than N, and means for transmitting the defined at least one TPC command on at least one of the M downlink carriers.

In accordance with a fourth aspect of the present invention, a UE of a multi-carrier wireless communication system is provided. The user equipment is arranged to transmit on N uplink carriers and receive on M downlink carriers in the communication with at least one radio base station, where the sum of N and M is equal to or larger than three. The user equipment is characterised in that it comprises means for receiving at least one TPC command on at least one of the M downlink carriers from at least one radio base station, the number of received TPC commands being equal to or lower than N, and means for adjusting the transmit power of the N uplink carriers based on the received at least one TPC command.

An advantage of the embodiments of the present invention is that they provide a solution for uplink power control in a multi-carrier system. Another advantage of the embodiments of the present invention is that the different downlink carriers are used in a way that optimizes the reliability of the power control commands in the case of frequency selective downlink channel conditions.

### BRIEF DESCRIPTION OF THE DRAWINGS

**Figure 1** illustrates schematically a part of a single- or multi-carrier WCDMA/HSPA system.
**Figure 2a-2f** illustrates schematically different embodiments of the present invention applied in some examples of multi-carrier connections with different carrier symmetries.
**Figures 3a-3f** are flowcharts of the methods of the NodeB and the UE according to different embodiments of the present invention.
**Figure 4** illustrates schematically the NodeB and UE according to embodiments of the present invention.

### DETAILED DESCRIPTION

In the following, the invention will be described in more detail with reference to certain embodiments and to accompanying drawings. For purposes of explanation and not limitation, specific details are set forth, such as particular scenarios, techniques, etc., in order to provide a thorough understanding of the present invention. However, it will be apparent to one skilled in the art that the present invention may be practised in other embodiments that depart from these specific details.

Moreover, those skilled in the art will appreciate that the functions and means explained herein below may be implemented using software functioning in conjunction with a programmed microprocessor or general purpose computer, and/or using an application specific integrated circuit (ASIC). It will also be appreciated that while the current invention is primarily described in the form of methods and devices, the invention may also be embodied in a computer program product as well as in a system comprising a computer processor and a memory coupled to the processor, wherein the memory is encoded with one or more programs that may perform the functions disclosed herein.

The present invention is described herein by way of reference to particular example scenarios. In particular the invention is described in a non-limiting general context in relation to a multi-carrier HSPA system. It should though be noted that the invention and its exemplary embodiments may also be applied to other types of radio access technologies with similar characteristics to HSPA in terms of power control, such as LTE, WiMAX and UTRA TDD. Furthermore, the present invention is described with the help of examples of different multi-carrier symmetries. However, the present invention is not limited to these examples. Any other multi-carrier symmetry will also be supported, regardless of the number of uplink and downlink carriers in a system.

The present invention relates to methods and arrangements that enable control of the uplink transmit power in a multi-carrier HSPA system. This is achieved by using the concept of TPC commands (used in single-carrier systems), adapted to support different kinds of multi-carrier scenarios, including the soft handover scenarios. An object is to provide an efficient and reliable uplink power control mechanism for multi-carrier systems, regardless of e.g. the multi-carrier symmetry and the used frequency bands for the different carriers.

In the present invention, one or more TPC commands are defined in the NodeB to control the transmit power of the uplink carriers, based on measurements of the signals from the UEs. These TPC commands are then transmitted on the downlink carriers to the UE in different ways depending on the number of downlink carriers and on the number of defined TPC commands. The UE will receive the TPC command(s) and adjust the uplink power in different ways depending on the type of TPC command(s) and the multi-carrier symmetry.

In a first embodiment of the present invention, the TPC commands are transmitted on one or more downlink control channels on the downlink carriers. In an exemplary embodiment of this first embodiment, the downlink control channel is the F-DPCH. If more than one TPC command is to be transmitted on one downlink carrier (this case is further explained below), then each TPC command is mapped on a separate F-DPCH on that carrier. In an alternative embodiment of this first embodiment, a new control channel is defined that can carry more than one TPC commands. However, in all the exemplary embodiments described hereinafter, the F-DPCH will be used for carrying TPC commands.

One main principle of the present invention is that the number of TPC commands that are defined and transmitted on the downlink shall be equal to or less than the number of uplink carriers to control. This means that for the case of one uplink carrier and two or more downlink carriers, only one TPC command shall be defined and transmitted on the downlink (i.e. on one or more downlink carriers) to control the uplink. In the case of multiple uplink carriers, the following two alternative possibilities are envisaged.
1. One TPC command per uplink carrier is defined and transmitted, in order for the UE to adjust the power of each uplink carrier separately. The number of TPC commands thus corresponds to the number of uplink carriers.
2. One single common TPC command - i.e. common for all uplink carriers - is defined and transmitted in order for the UE to adjust the power of all the uplink carriers in the same way. In this example, there are different alternatives on how to define the common TPC command. In a first alternative example A. a TPC command valid for one of the uplink carriers, e.g. the anchor carrier, is used to power control all uplink carriers in the same way. In a second alternative example B, the different TPC commands valid for all the uplink carriers are combined according to some pre-defined combination rule. In one example the pre-defined combination rule is the *"or* of *down"* rule, stating that the combined value indicates "*up*" when all TPC commands indicate "*up*", and indicates "*down*" if at least one of the TPC commands indicates *"down".* In an alternative example the pre-defined combination rule is the *"or of up"* rule, stating that the combined value indicates "*down*" when all TPC commands indicate "*down*", and indicates *"up"* if at least one of the TPC commands indicates "*up*".

A combination of the alternative embodiments 1 and 2 above is also possible, by using alternative embodiment 1 for one group of uplink carriers, and alternative embodiment 2 for the rest of the uplink carriers. In the example with three uplink carriers and two downlink carriers, one TPC command is defined to control the power of the two first uplink carriers jointly (according to alternative example 2 above) and one TPC command is defined to control the third uplink carrier separately (according to alternative embodiment 1 above) for instance.

The transmission of the TPC command(s) may also vary with the different multi-carrier symmetries, as it depends on the number of available downlink carriers. In the case of alternative embodiment 1 above, there are three different alternatives for the transmission of the TPC commands, depending on if the number of downlink carriers M is larger than, smaller than, or equal to the number of uplink carriers N to power control. The number of uplink carriers N corresponds to the number of defined TPC commands to transmit. The three alternatives are described below:
i. When the number of downlink carriers M is equal to or larger than the number of uplink carriers N to control, each TPC command is transmitted on a separate downlink carrier.
ii. However, when the number of downlink carriers M is larger than the number of uplink carriers N to control, one TPC command (e.g. the TPC command for the anchor uplink carrier) may be transmitted on more than one downlink carrier to control one of the uplink carriers. The UE will then adjusts the uplink transmit power for the uplink carrier according to a combination of the commands received on the different downlink channels. The combination may be a soft combination using weight factors which are either fixed or set according to the estimated downlink channel conditions on respective carrier. The advantage of this alternative is that the reliability of the uplink power control is improved in case of frequency selective downlink channel conditions. In soft handover, the UE will receive the same TPC command on several carriers but also from more than one NodeB (i.e. from all NodeBs involved in the soft handover). In one exemplary embodiment, the combination (according to a pre-defined combination rule) of the TPC values received from the different NodeBs is done before the soft combination of the TPC values on the different downlink carriers. In an alternative exemplary embodiment, the different carrier values are combined before combining the values from the different NodeBs. In one embodiment, the pre-defined combination rule is the *"or of down"* rule as defined above.
iii. When the number of downlink carriers M is smaller than the number of uplink carriers N to control, more than one TPC command is to be transmitted on one downlink carrier in order to be able to fit all TPC commands on the downlink carriers.

In the case of alternative example 2 above with only one TPC command to transmit, there will always be an available downlink carrier to use for the transmission. However, if there are more than one downlink carriers, the reliability of the power control can be increased in case of frequency selective downlink channel conditions, according to a further exemplary embodiment, by transmitting the TPC command on more than one downlink carrier. The UE will then adjust the uplink transmit power for the uplink carrier according to a combination of the commands received on the different downlink channels. The combination may be a soft combination using weight factors which can be either fixed or set according to the estimated downlink channel conditions on respective carrier.

In the following, the above embodiments will be further explained with reference to **figures 2a-2f****.** In the figures, downlink is abbreviated DL and uplink is abbreviated UL.

Starting with the alternative embodiment 1 above, and supposing a multi-carrier symmetry with two uplink carriers (one anchor carrier (A) 203 and one non-anchor carrier (NA) 204) and two downlink carriers (one anchor carrier (A) 201 and one non-anchor carrier (NA) 202), **figure 2a** illustrates how one TPC command (TPC₁) transmitted on the F-DPCH of the anchor downlink carrier 201 is used by the UE to adjust the transmit power of the anchor uplink carrier 203, and one TPC command (TPC₂) transmitted on the F-DPCH of the non-anchor downlink carrier 202 is used by the UE to adjust the transmit power of the non-anchor uplink carrier 204. In the case of soft handover, the UE combines the TPC commands received from different soft handover cells according to the *"or* of *down"* rule.

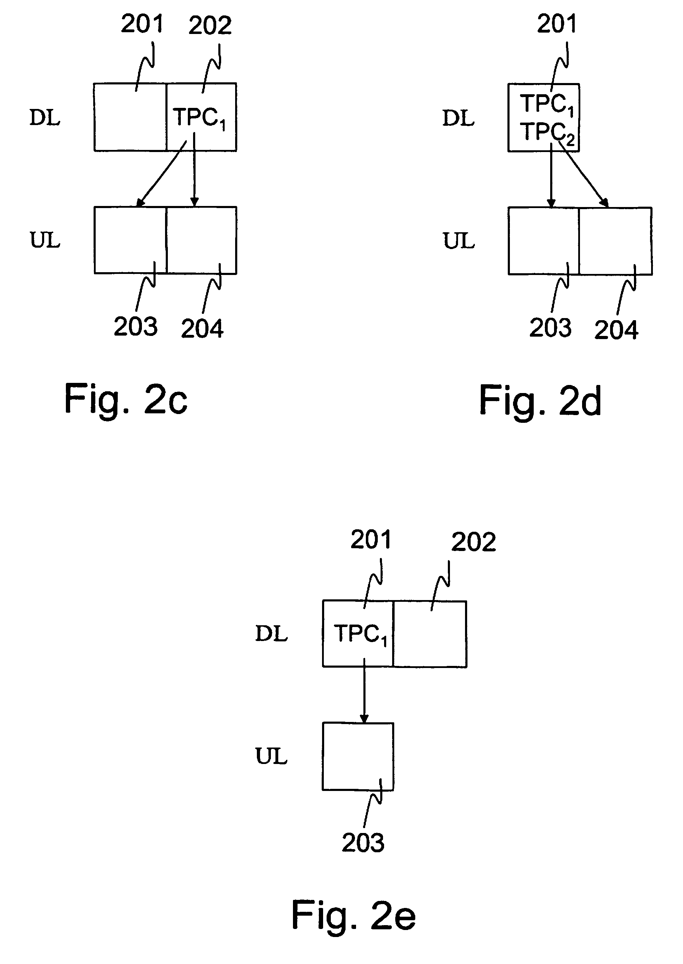

Power control in a system supposing the same example of multi-carrier symmetry as above with the alternative example 2, and with the common TPC command defined according to any of the two alternatives A or B described above, is schematically illustrated in f**igure 2b**. The TPC command TPC₁ is transmitted on the F-DPCH of the anchor downlink carrier 201, in order for the UE to adjust the transmit power of both the anchor 203 and the non-anchor uplink carrier 204 in the same way. If TPC₁ indicates "up", then the transmit power of both uplink carriers 203, 204 are adjusted by a power step "up". In case of soft handover, the UE combines the TPC commands received from different soft handover cells according to the "or of down" rule. The TPC₁ command may also be transmitted on the non-anchor downlink carrier 202 instead, as illustrated in figure 2c. It is also possible, as discussed above, to transmit the TPC₁ command on both the anchor 201 and the non-anchor downlink carrier 202, in order to improve the reliability of the uplink power control in case of frequency selective downlink channel conditions.

Figure 2d illustrates the case of the alternative embodiment 1, supposing a multi-carrier symmetry with two uplink (one anchor 203 and one non-anchor carrier 204) and one downlink carrier 201. Two TPC commands (TPC₁ and TPC₂) are transmitted on separate F-DPCH of the same downlink carrier 201, as described above. The UE adjusts the transmit power of the anchor uplink carrier 203 according to the TPC command TPC₁ received on the first F-DPCH of the anchor downlink carrier 201, and adjusts the transmit power of the non-anchor uplink carrier 204 according to the TPC command TPC₂ received on the second F-DPCH of the anchor downlink carrier 201.

**Figure 2e-2f** illustrates the case of a multi-carrier symmetry with two downlink carriers (one anchor 201 and one non-anchor carrier 202) and one uplink carrier 203. In this case there will only be one TPC command, as there is only one uplink carrier to control, so there is no difference between alternative embodiment 1 and 2. The TPC command TPC₁ is in **figure 2e** transmitted on the F-DPCH of the anchor downlink carrier 201, in order for the UE to adjust the uplink carrier. In case of soft handover, the UE combines the TPC commands received from different soft handover cells according to the "or of down" rule. It is also possible to transmit TPC₁ on the F-DPCH of the non-anchor downlink carrier 202 instead.

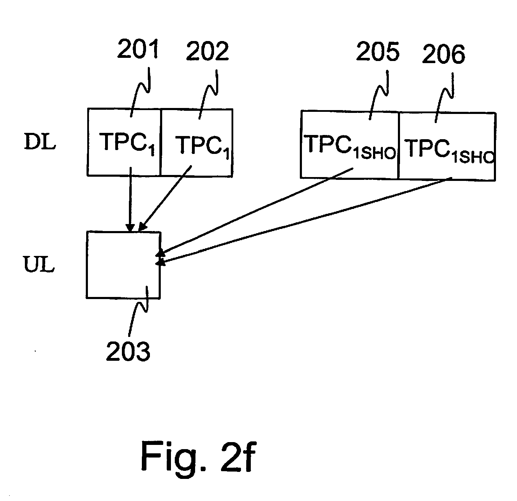

In order to improve the reliability of the uplink power control in case of frequency selective downlink channel conditions, and according to **figure 2f****,** the TPC command TPC₁ is transmitted both on the F-DPCH of the non-anchor downlink carrier 202 and on the F-DPCH of the anchor downlink carrier 201. The UE will then adjust the uplink transmit power for the uplink carrier 203 according to the soft combination of command TPC₁ received on the F-DPCH of the anchor downlink carrier 201 (referred to as TPC_{1A} ) and command TPC₁ received on the F-DPCH of the non-anchor downlink carrier 202 (referred to as TPC_{1NA}) as follows: TPC₁ combined = a1 *TPC_{1A} + a2*TPC_{1NA}, where a1 and a2 are real valued weight factors which can be either fixed or set according to estimated **downlink** channel conditions on respective carrier. **Figure 2f** also illustrates the soft handover situation, with a TPC command TPC_{1SHO} received on the two downlink carriers 205, 206 of a soft handover NodeB. In this case, the UE combines the TPC command received from the soft handover NodeB TPC_{1SHO} and from the serving NodeB TPC₁ according to the "or of down" rule, either before or after the soft combination of the TPC commands of the different downlink carriers.

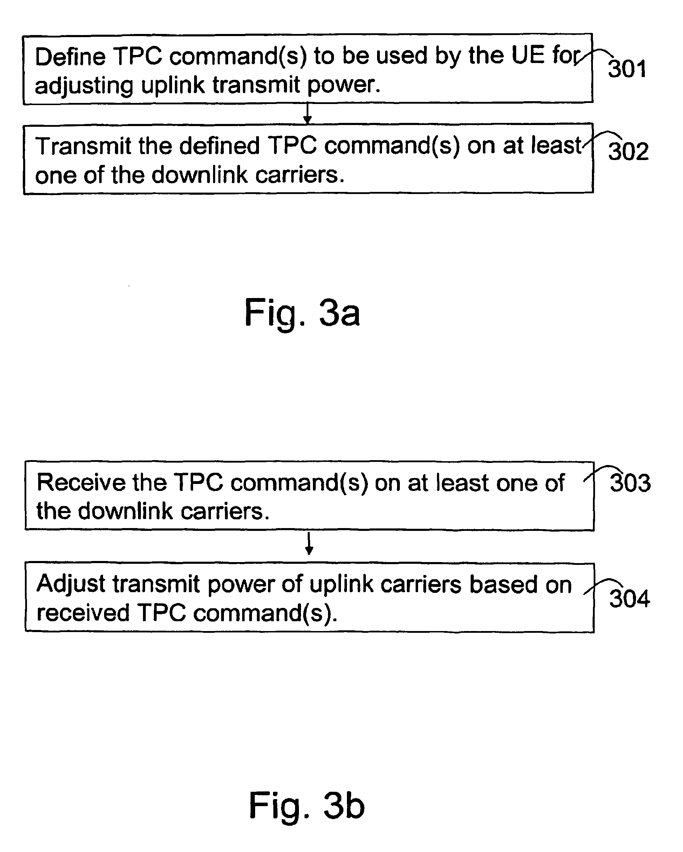

**Figure 3a** is a flowchart of the method for the NodeB, according to one embodiment of the present invention. In step 301 the NodeB defines at least one TPC command to be used by the user equipment for adjusting the transmit power of the uplink carriers. In the next step 302 the NodeB transmits the defined TPC command(s) on at least one of the downlink carriers.

Furthermore, **figure 3b** is a flowchart of the method for the UE, according to one embodiment of the present invention. In step 303, the UE receives the TPC command(s) on at least one of the downlink carriers, from the NodeB. In the next step 304 the UE adjusts the transmit power of the uplink carriers based on the received TPC command(s).

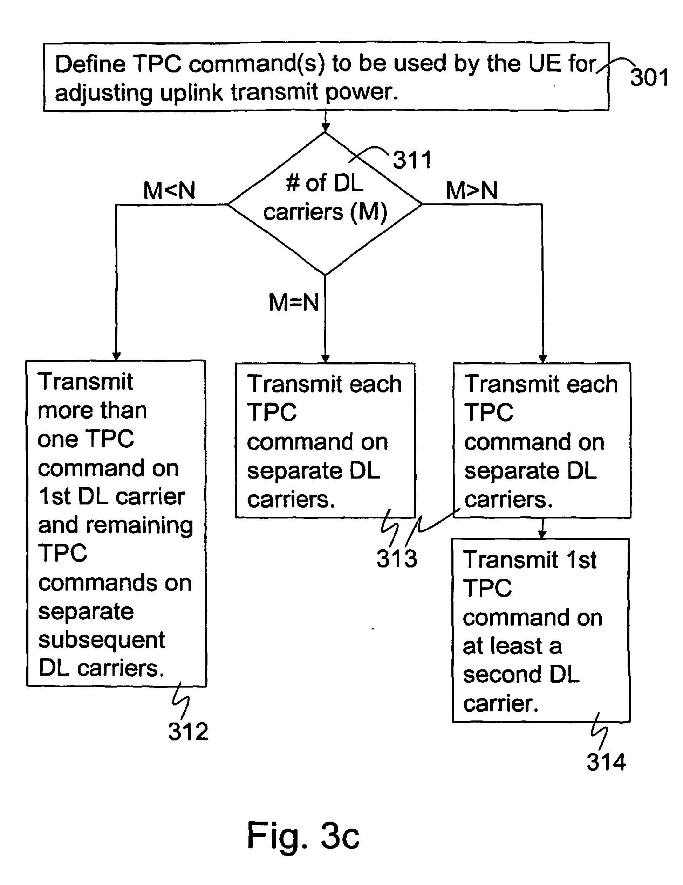

**Figure 3c** is a flowchart of the method for the NodeB, according to one example of alternative embodiment 1 above. In step 301 the NodeB defines N TPC commands to be used by the user equipment for adjusting the transmit power of the N uplink carriers respectively. Depending on the multi-carrier symmetry, i.e. the number of downlink carriers M 311 in relation to the number of uplink carriers or TPC commands N, the step of transmitting 302 the N TPC commands comprises the sub step:
- M<N: Transmitting, in step 312, more than one TPC commands on the first downlink carrier and the remaining TPC commands on separate subsequent downlink carriers. This is done in order to fit all N TPC commands onto the M downlink carriers.
- M=N: Transmitting, in step 313, each TPC command on a separate downlink carrier.
- M>N: Transmitting, in step 313, each TPC command on a separate downlink carrier and transmitting, in step 314, a first of the N TPC commands on at least one more downlink carrier. This is done in order to enhance the reliability of the power control for the first uplink carrier in case of frequency selective downlink channel conditions (carriers need not to be adjacent in the frequency band). This first TPC command could for example be the TPC command corresponding to the uplink anchor carrier. It is also possible to only transmit each TPC command on a separate downlink carrier, as in step 313 above. Some downlink carriers will then not carry any TPC commands thus saving signaling capacity.

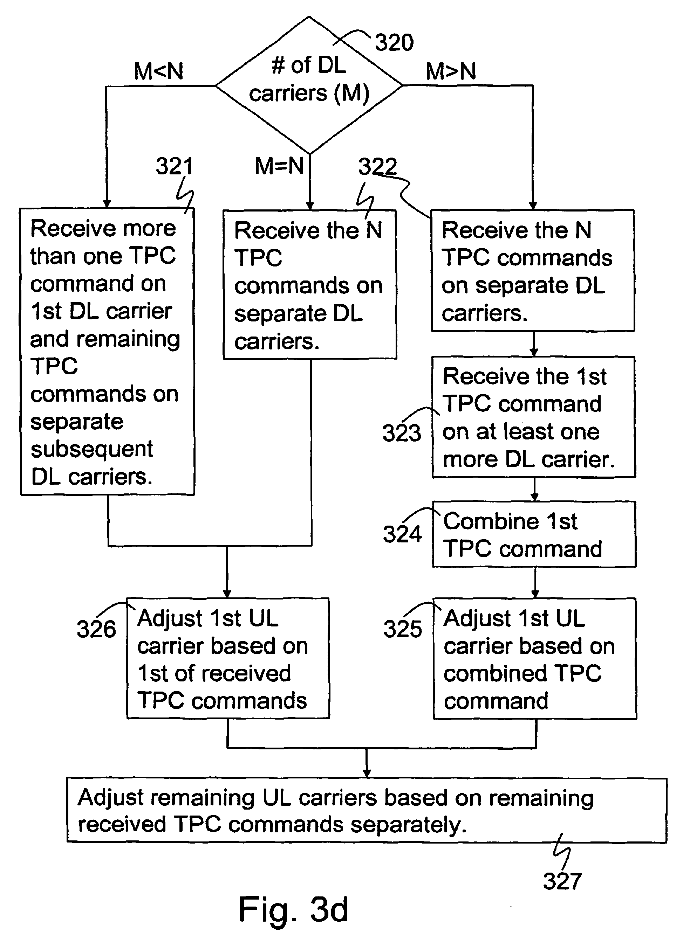

Furthermore, **figure 3d** is a flowchart of the method for the UE, according to one example of alternative embodiment 1 above. The step 303 of receiving (see **figure 3b**) the N TPC commands will in this embodiment also depend on the multi-carrier symmetry, i.e. the number of downlink carriers M , determined in step 320, in relation to the number of uplink carriers or TPC commands N, and will thus comprise the following sub step:
- M<N: Receiving, in step 321, more than one TPC commands on the first downlink carrier and the remaining TPC commands on separate subsequent downlink carriers. The first TPC command can in this case be used to adjust, in step 326, the transmit power of the first uplink carrier without any combining step.
- M=N: Receiving, in step 322, each TPC command on a separate downlink carrier. Also in this case the first TPC command can be used to adjust, in step 326, the transmit power of the first uplink carrier without any combining step.
- M>N: Also here each TPC command is received on a separate downlink carrier as in step 322, but the first of the N TPC commands is also received, in step 323, on more than one downlink carrier. A combination step 324 is thus needed before the step of adjusting 325 the transmit power of the first uplink carrier based on the combined TPC command.

The last step 327 is the adjustment of the transmit power of the remaining uplink carriers based on the remaining received TPC commands separately, which is thus done regardless of if M is larger than, equal to or smaller than N.

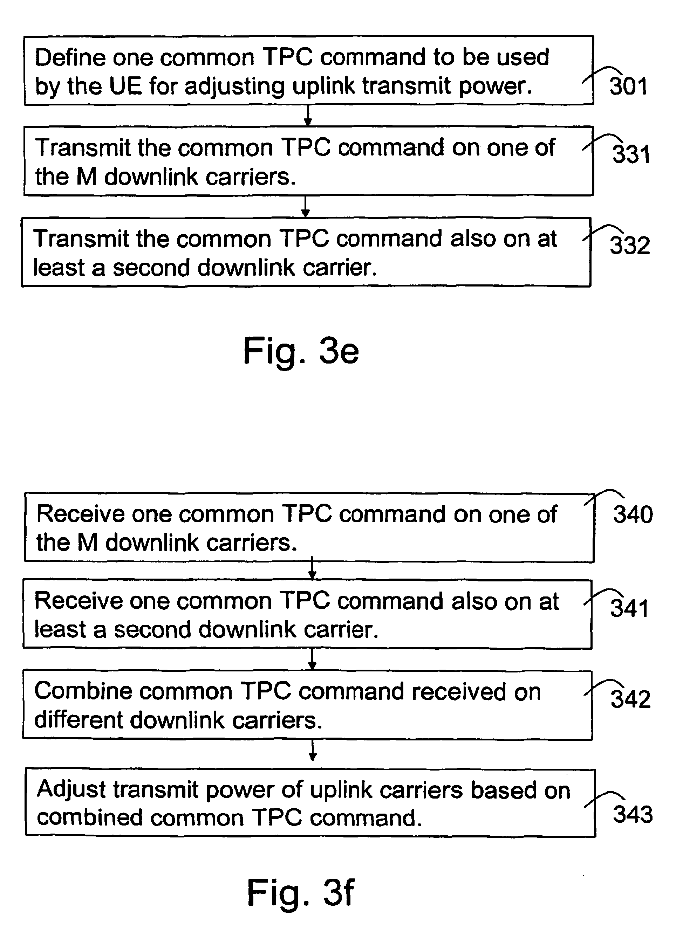

**Figure 3e** is a flowchart of the method for the NodeB, according to alternative embodiment 2 above, when the number of downlink carriers M is larger than one. In step 301 the NodeB defines one common TPC command to be used by the user equipment for adjusting the transmit power of the N uplink carriers. This definition of a common TPC command can be done according to either the first alternative embodiment A or the second alternative embodiment B described above. The NodeB then transmits, in step 331, the common TPC command on one of the M downlink carriers, and in order to enhance the reliability of the power control for the first uplink carrier in case of frequency selective downlink channel conditions, it also transmits, in step 332, the common TPC command on at least a second downlink carrier.

Furthermore, **figure 3f** is a flowchart of the method for the UE, according to alternative example 2 above, when the number of downlink carriers M is larger than one. In step 340, the UE receives the common TPC command on one of the M downlink carriers, from the NodeB. However it also receives, in step 341, the common TPC command on at least a second downlink carrier. This means that the UE must combine, in step 342, the TPC commands received on the different downlink carriers, before it can adjust, in step 343, the transmit power of the uplink carriers based on the combined common TPC command.

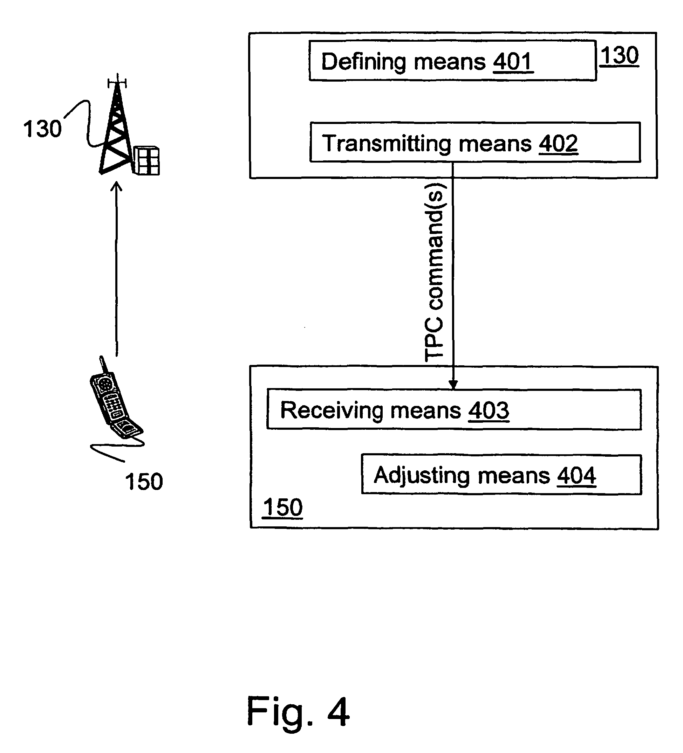

Schematically illustrated in **figure 4** and according to one embodiment, the NodeB 130 comprises means for defining 401 one or more TPC commands to be used by the user equipment for adjusting the transmit power of the uplink carriers. It also comprises means for transmitting 402 the defined TPC command(s) on the downlink carriers.

Also illustrated in **figure 4** is the UE 150. It comprises means for receiving 403 one or more TPC commands on the downlink carriers from one or more NodeBs. It also comprises means for adjusting 404 the transmit power of the uplink carriers based on the received TPC command(s).

It should be noted that the means illustrated in **figure 4** may be implemented by physical or logical entities using software functioning in conjunction with a programmed microprocessor or general purpose computer, and/or using an application specific integrated circuit (ASIC).

The above mentioned and described embodiments are only given as examples and should not be limiting to the present invention. Other solutions, uses, objectives, and functions within the scope of the invention as claimed in the accompanying patent claims should be apparent for the person skilled in the art.

## Claims

1. A method of uplink transmit power control in a radio base station of a multi-carrier wireless communication system, wherein the radio base station receives on N uplink carriers and transmits on M downlink carriers in the communication with at least one user equipment, and wherein the sum of N and M is equal to or larger than three, said method **characterised by** the steps of
- defining (301) N transmit power control, TPC, commands to be used by one of said user equipment for adjusting the transmit power of the N uplink carriers, and
- transmitting (312) both a first and at least a second of said N TPC commands on a first downlink carrier and each of the remaining TPC commands on separate subsequent downlink carriers, in order to fit all N TPC commands onto the M downlink carriers when M is smaller than N, and
- transmitting (313) each of said N TPC commands on separate downlink carriers, when M is larger than or equal to N.

2. The method according to claim 1, wherein said N TPC commands are transmitted on at least one downlink control channel of said M downlink carriers.

3. The method according to claim 2, wherein said downlink control channel is a fractional downlink physical control channel, F-DPCH.

4. The method according to any of claims 1-3, wherein the step of transmitting (313) each of said N TPC commands on separate downlink carriers comprises the additional sub step of transmitting (314) a first of said N TPC commands also on at least a second downlink carrier, in order to increase the reliability of the first of said N TPC commands when M is larger than N.

5. A method of uplink transmit power control in a user equipment of a multi-carrier wireless communication system, wherein the user equipment transmits on N uplink carriers and receives on M downlink carriers in the communication with at least one radio base station, and wherein the sum of N and M is equal to or larger than three, said method **characterised by** the steps of
- receiving (321, 322) N TPC commands on at least one of the M downlink carriers from at least one radio base station, wherein both a first and at least a second of said N TPC commands are received on a first downlink carrier and each of the remaining TPC commands on separate subsequent downlink carriers when M is smaller than N, and the N TPC commands are received on separate downlink carriers when M is larger than or equal to N, and
- adjusting (304) the transmit power of the N uplink carriers based on the received N TPC commands.

6. The method according to claim 5, wherein said N TPC commands are received on at least one downlink control channel of said M downlink carriers.

7. The method according to any of claims 5 or 6, wherein the step of adjusting (304) the transmit power of the N uplink carriers comprises the sub step of adjusting the transmit power of each of the uplink carriers based on each of the received N TPC commands separately.

8. The method according to any of claims 5 or 6, wherein the step of receiving (321, 322) said N TPC commands on at least one of the M downlink carriers comprises the additional sub step of receiving (323) a first of said N TPC commands also on at least a second downlink carrier when M is larger than N, and wherein the step of adjusting (304) the transmit power of the N uplink carriers comprises the sub steps of
- combining (324) the first of said N TPC commands received on the first downlink carrier and on at least a second downlink carrier according to a soft combining rule, when M is larger than N,
- adjusting (325) the transmit power of the first uplink carrier based on the combined TPC command when M is larger than N,
- adjusting (326) the transmit power of the first uplink carrier based on the first of the received N TPC commands when M is equal to or smaller than N, and
- adjusting (327) the transmit power of each of the remaining uplink carriers based on the remaining received TPC commands separately.

9. The method according to claim 8, comprising, when M is larger than N and when the number of said at least one radio base station is at least two, the additional sub step of combining each of said N TPC commands received from said at least two radio base stations according to a pre-defined combination rule, before the sub step of combining the first of said N TPC commands received on more than one carrier.

10. The method according to claim 8, comprising, when M is larger than N and when the number of said at least one radio base station is at least two, the additional sub step of combining each of said N TPC commands received from said at least two radio base stations according to a pre-defined combination rule, after the sub step of combining the first of said N TPC commands received on more than one carrier.

11. A radio base station (130) of a multi-carrier wireless communication system, wherein the radio base station is arranged to receive on N uplink carriers and transmit on M downlink carriers in the communication with at least one user equipment, and wherein the sum of N and M is equal to or larger than three, said radio base station **characterised in that** it comprises
- means for defining (401) N transmit power control, TPC, commands to be used by one of said user equipment for adjusting the transmit power of the N uplink carriers, and
- means for transmitting both a first and at least a second of said N TPC commands on a first downlink carrier and each of the remaining TPC commands on separate subsequent downlink carriers, in order to fit all N TPC commands onto the M downlink carriers when M is smaller than N, and
- means for transmitting each of said N TPC commands on separate downlink carriers, when M is larger than or equal to N.

12. A user equipment (150) of a multi-carrier wireless communication system, wherein the user equipment is arranged to transmit on N uplink carriers and receive on M downlink carriers in the communication with at least one radio base station, and wherein the sum of N and M is equal to or larger than three, said user equipment **characterised in that** it comprises
- means for receiving (403) N TPC commands on at least one of the M downlink carriers from at least one radio base station, further comprising means for receiving both the first and at least a second of said N TPC commands on a first downlink carrier and each of the remaining TPC commands on separate subsequent downlink carriers from at least one radio base station when M is smaller than N, and means for receiving the N TPC commands on separate downlink carriers from at least one radio base stations when M is larger than or equal to N, and
- means for adjusting (404) the transmit power of the N uplink carriers based on the received N TPC commands.

## Patentansprüche

1. Verfahren zur Uplink-Sendeleistungssteuerung in einer Funkbasisstation eines drahtlosen Mehrträger-Kommunikationssystems, worin die Funkbasisstation auf N Uplink-Trägern empfängt und auf M Downlink-Trägern in der Kommunikation mit mindestens einem Benutzergerät überträgt und worin die Summe von N und M größer oder gleich drei ist, wobei das Verfahren durch die folgenden Schritte gekennzeichnet ist:
- Definieren (301) von N TPC(Sendeleistungssteuerung)-Befehlen, die von einem der Benutzergeräte zu verwenden sind, um die Sendeleistung der N Uplink-Träger anzupassen, und
- Übertragen (312) von sowohl einem ersten als auch mindestens einem zweiten der N TPC-Befehle auf einem ersten Downlink-Träger und jedem der restlichen TPC-Befehle auf separaten nachfolgenden Downlink-Trägern, um alle N TPC-Befehle auf die M Downlink-Träger einzupassen, wenn M kleiner als N ist, und
- Übertragen (313) von jedem der N TPC-Befehle auf separaten Downlink-Trägern, wenn M größer oder gleich N ist.

2. Verfahren nach Anspruch 1, worin die N TPC-Befehle auf mindestens einem Downlink-Steuerkanal der M Downlink-Träger übertragen werden.

3. Verfahren nach Anspruch 2, worin der Downlink-Steuerkanal ein fraktionaler physikalischer Downlink-Steuerkanal, F-DPCH ist.

4. Verfahren nach einem der Ansprüche 1-3, worin der Schritt des Übertragens (313) eines jeden der N TPC-Befehle auf separaten Downlink-Trägern den zusätzlichen Unterschritt umfasst, einen ersten der N TPC-Befehle auch auf mindestens einem zweiten Downlink-Träger zu übertragen (314), um die Zuverlässigkeit des ersten der N TPC-Befehle zu erhöhen, wenn M größer als N ist.

5. Verfahren zur Uplink-Sendeleistungssteuerung in einem Benutzergerät eines drahtlosen Mehrträger-Kommunikationssystems, worin das Benutzergerät auf N Uplink-Trägern überträgt und auf M Downlink-Trägern in der Kommunikation mit mindestens einer Funkbasisstation empfängt und worin die Summe von N und M größer oder gleich drei ist, wobei das Verfahren durch die folgenden Schritte gekennzeichnet ist:
- Empfangen (321, 322) von N TPC-Befehlen auf mindestens einem der M Downlink-Träger von mindestens einer Funkbasisstation, worin sowohl ein erster als auch mindestens ein zweiter der N TPC-Befehle auf einem ersten Downlink-Träger empfangen werden und jeder der restlichen TPC-Befehle auf separaten nachfolgenden Downlink-Trägern empfangen wird, wenn M kleiner als N ist, und die N TPC-Befehle auf separaten Downlink-Trägern empfangen werden, wenn M größer oder gleich N ist, und
- Anpassen (304) der Sendeleistung der N Uplink-Träger auf der Basis der empfangenen N TPC-Befehle.

6. Verfahren nach Anspruch 5, worin die N TPC-Befehle auf mindestens einem Downlink-Steuerkanal der M Downlink-Träger empfangen werden.

7. Verfahren nach einem der Ansprüche 5 oder 6, worin der Schritt des Anpassens (304) der Sendeleistung der N Uplink-Träger den Unterschritt des Anpassens der Sendeleistung eines jeden der Uplink-Träger umfasst, auf jedem der empfangenen N TPC-Befehle separat basierend.

8. Verfahren nach einem der Ansprüche 5 oder 6, worin der Schritt des Empfangens (321, 322) der N TPC-Befehle auf mindestens einem der M Downlink-Träger den zusätzlichen Unterschritt umfasst, einen ersten der N TPC-Befehle auch auf mindestens einem zweiten Downlink-Träger zu empfangen (323), wenn M größer als N ist, und worin der Schritt des Anpassens (304) der Sendeleistung der N Uplink-Träger folgende Unterschritte umfasst:
- Kombinieren (324) des ersten der N TPC-Befehle, der auf dem ersten Downlink-Träger und auf mindestens einem zweiten Downlink-Träger empfangen wird, gemäß einer Soft-Kombinations-Regel, wenn M größer als N ist,
- Anpassen (325) der Sendeleistung des ersten Uplink-Trägers auf der Basis des kombinierten TPC-Befehls, wenn M größer als N ist,
- Anpassen (326) der Sendeleistung des ersten Uplink-Trägers auf der Basis des ersten der empfangenen N TPC-Befehle, wenn M kleiner oder gleich N ist, und
- Anpassen (327) der Sendeleistung eines jeden der restlichen Uplink-Träger, auf den restlichen empfangenen TPC-Befehlen separat basierend.

9. Verfahren nach Anspruch 8, das, wenn M größer als N ist und wenn die Anzahl der mindestens einen Funkbasisstation mindestens gleich zwei ist, den zusätzlichen Unterschritt umfasst, jeden der N TPC-Befehle, die von den mindestens zwei Funkbasisstationen empfangen werden, gemäß einer vorgegebenen Kombinationsregel zu kombinieren, und zwar vor dem Unterschritt des Kombinierens des ersten der N TPC-Befehle, die auf mehr als einem Träger empfangen werden.

10. Verfahren nach Anspruch 8, das, wenn M größer als N ist und wenn die Anzahl der mindestens einen Funkbasisstation mindestens gleich zwei ist, den zusätzlichen Unterschritt umfasst, jeden der N TPC-Befehle, die von den mindestens zwei Funkbasisstationen empfangen werden, gemäß einer vorgegebenen Kombinationsregel zu kombinieren, und zwar nach dem Unterschritt des Kombinierens des ersten der N TPC-Befehle, die auf mehr als einem Träger empfangen werden.

11. Funkbasisstation (130) eines drahtlosen Mehrträger-Kommunikationssystems, worin die Funkbasisstation dazu angeordnet ist, auf N Uplink-Trägern zu empfangen und auf M Downlink-Trägern in der Kommunikation mit mindestens einem Benutzergerät zu übertragen, und worin die Summe von N und M größer oder gleich drei ist, wobei die Funkbasisstation **dadurch gekennzeichnet ist, dass** sie Folgendes umfasst:
- ein Mittel zum Definieren (401) von N TPC(Sendeleistungssteuerung)-Befehlen, die von einem der Benutzergeräte zu verwenden sind, um die Sendeleistung der N Uplink-Träger anzupassen, und
- ein Mittel zum Übertragen von sowohl einem ersten als auch mindestens einem zweiten der N TPC-Befehle auf einem ersten Downlink-Träger und jedem der restlichen TPC-Befehle auf separaten nachfolgenden Downlink-Trägern, um alle N TPC-Befehle auf die M Downlink-Träger einzupassen, wenn M kleiner als N ist, und
- ein Mittel zum Übertragen von jedem der N TPC-Befehle auf separaten Downlink-Trägern, wenn M größer oder gleich N ist.

12. Benutzergerät (150) eines drahtlosen Mehrträger-Kommunikationssystems, worin das Benutzergerät dazu angeordnet ist, auf N Uplink-Trägern zu übertragen und auf M Downlink-Trägern in der Kommunikation mit mindestens einer Funkbasisstation zu empfangen, und worin die Summe von N und M größer oder gleich drei ist, wobei das Benutzergerät **dadurch gekennzeichnet ist, dass** es Folgendes umfasst:
- ein Mittel zum Empfangen (403) von N TPC-Befehlen auf mindestens einem der M Downlink-Träger von mindestens einer Funkbasisstation, außerdem ein Mittel umfassend, um sowohl den ersten als auch mindestens einen zweiten der N TPC-Befehle auf einem ersten Downlink-Träger und jeden der restlichen TPC-Befehle auf separaten nachfolgenden Downlink-Trägern von mindestens einer Funkbasisstation zu empfangen, wenn M kleiner als N ist, und ein Mittel, um die N TPC-Befehle auf separaten Downlink-Trägern von mindestens einer Funkbasisstation zu empfangen, wenn M größer oder gleich N ist, und
- ein Mittel zum Anpassen (404) der Sendeleistung der N Uplink-Träger auf der Basis der empfangenen N TPC-Befehle.

## Revendications

1. Procédé de contrôle de puissance d'émission en liaison montante dans une station de base radio d'un système de communication sans fil à porteuses multiples, dans lequel la station de base radio reçoit sur N porteuses de liaison montante et émet sur M porteuses de liaison descendante lors de la communication avec au moins un équipement d'utilisateur, et dans lequel la somme de N et M est égale ou supérieure à trois, ledit procédé étant **caractérisé par** les étapes ci-dessous consistant à :
- définir (301) N commandes de contrôle de puissance d'émission, TPC, destinées à être utilisées par l'un desdits équipements d'utilisateur en vue d'ajuster la puissance d'émission des N porteuses de liaison montante ; et
- transmettre (312) à la fois une première commande et au moins une seconde commande desdites N commandes de contrôle TCP sur une première porteuse de liaison descendante, et chacune des commandes de contrôle TCP restantes sur des porteuses de liaison descendante subséquentes individuelles, afin d'adapter la totalité des N commandes de contrôle TCP sur les M porteuses de liaison descendante lorsque M est inférieur à N ; et
- transmettre (313) chacune desdites N commandes de contrôle TCP sur des porteuses de liaison descendante individuelles, lorsque M est supérieur ou égal à N.

2. Procédé selon la revendication 1, dans lequel lesdites N commandes de contrôle TCP sont transmises sur au moins un canal de commande de liaison descendante desdites M porteuses de liaison descendante.

3. Procédé selon la revendication 2, dans lequel ledit canal de commande de liaison descendante est un canal de commande physique de liaison descendante fractionnaire, F-DPCH.

4. Procédé selon l'une quelconque des revendications 1 à 3, dans lequel l'étape consistant à transmettre (313) chacune desdites N commandes de contrôle TCP sur des porteuses de liaison descendante individuelles comprend la sous-étape supplémentaire consistant à transmettre (314) une première commande desdites N commandes de contrôle TCP également sur au moins une seconde porteuse de liaison descendante, afin d'augmenter la fiabilité de la première commande desdites N commandes de contrôle TCP lorsque M est supérieur à N.

5. Procédé de contrôle de puissance d'émission en liaison montante dans un équipement d'utilisateur d'un système de communication sans fil à porteuses multiples, dans lequel l'équipement d'utilisateur émet sur N porteuses de liaison montante et reçoit sur M porteuses de liaison descendante lors de la communication avec au moins une station de base radio, et dans lequel la somme de N et M est égale ou supérieure à trois, ledit procédé étant **caractérisé par** les étapes ci-dessous consistant à :
- recevoir (321, 322) N commandes de contrôle TCP sur au moins l'une des M porteuses de liaison descendante à partir d'au moins une station de base radio, dans lequel à la fois une première commande et au moins une seconde commande desdites N commandes de contrôle TCP sont reçues sur une première porteuse de liaison descendante et chacune des commandes de contrôle TCP restantes sont reçues sur des porteuses de liaison descendante subséquentes individuelles lorsque M est inférieur à N, et les N commandes de contrôle TCP sont reçues sur des porteuses de liaison descendante individuelles lorsque M est supérieur ou égal à N ; et
- ajuster (304) la puissance d'émission des N porteuses de liaison montante sur la base des N commandes de contrôle TCP reçues.

6. Procédé selon la revendication 5, dans lequel lesdites N commandes de contrôle TCP sont reçues sur au moins un canal de commande de liaison descendante desdites M porteuses de liaison descendante.

7. Procédé selon l'une quelconque des revendications 5 ou 6, dans lequel l'étape consistant à ajuster (304) la puissance d'émission des N porteuses de liaison montante comprend la sous-étape consistant à ajuster la puissance d'émission de chacune des porteuses de liaison montante sur la base de chacune des N commandes de contrôle TCP individuelles reçues.

8. Procédé selon l'une quelconque des revendications 5 ou 6, dans lequel l'étape consistant à recevoir (321, 322) lesdites N commandes de contrôle TCP sur au moins l'une des M porteuses de liaison descendante comprend la sous-étape supplémentaire consistant à recevoir (323) une première commande desdites N commandes de contrôle TCP également sur au moins une seconde porteuse de liaison descendante lorsque M est supérieur à N, et dans lequel l'étape consistant à ajuster (304) la puissance d'émission des N porteuses de liaison montante comprend les sous-étapes ci-dessous consistant à :
- combiner (324) la première commande desdites N commandes de contrôle TCP reçues sur la première porteuse de liaison descendante et sur au moins une seconde porteuse de liaison descendante selon une règle de combinaison logicielle, lorsque M est supérieur à N ;
- ajuster (325) la puissance d'émission de la première porteuse de liaison montante sur la base de la commande de contrôle TCP combinée, lorsque M est supérieur à N;
- ajuster (326) la puissance d'émission de la première porteuse de liaison montante sur la base de la première commande des N commandes de contrôle TCP reçues, lorsque M est égal ou inférieur à N ; et
- ajuster (327) la puissance d'émission de chacune des porteuses de liaison montante restantes sur la base des commandes de contrôle TCP individuelles restantes reçues.

9. Procédé selon la revendication 8, comprenant, lorsque M est supérieur à N, et lorsque le nombre de ladite au moins une station de base radio est au moins égal à deux, la sous-étape supplémentaire consistant à combiner chacune desdites N commandes de contrôle TCP reçues à partir desdites au moins deux stations de base radio selon une règle de combinaison prédéfinie, avant la sous-étape consistant à combiner la première commande desdites N commandes de contrôle TCP reçues sur plus d'une porteuse.

10. Procédé selon la revendication 8, comprenant, lorsque M est supérieur à N, et lorsque le nombre de ladite au moins une station de base radio est au moins égal à deux, la sous-étape supplémentaire consistant à combiner chacune desdites N commandes de contrôle TCP reçues à partir desdites au moins deux stations de base radio selon une règle de combinaison prédéfinie, après la sous-étape consistant à combiner la première commande desdites N commandes de contrôle TCP reçues sur plus d'une porteuse.

11. Station de base radio (130) d'un système de communication sans fil à porteuses multiples, dans laquelle la station de base radio est agencée de manière à recevoir sur N porteuses de liaison montante et à émettre sur M porteuses de liaison descendante lors de la communication avec au moins un équipement d'utilisateur, et dans laquelle la somme de N et M est égale ou supérieure à trois, ladite station de base radio étant **caractérisée en ce qu'**elle comprend :
- un moyen pour définir (401) N commandes de contrôle de puissance d'émission, TPC, destinées à être utilisées par l'un desdits équipements d'utilisateur en vue d'ajuster la puissance d'émission des N porteuses de liaison montante ; et
- un moyen pour transmettre à la fois une première commande et au moins une seconde commande desdites N commandes de contrôle TCP sur une première porteuse de liaison descendante, et chacune des commandes de contrôle TCP restantes sur des porteuses de liaison descendante subséquentes individuelles, afin d'adapter la totalité des N commandes de contrôle TCP sur les M porteuses de liaison descendante lorsque M est inférieur à N ; et
- un moyen pour transmettre chacune desdites N commandes de contrôle TCP sur des porteuses de liaison descendante individuelles, lorsque M est supérieur ou égal à N.

12. Équipement d'utilisateur (150) d'un système de communication sans fil à porteuses multiples, dans lequel l'équipement d'utilisateur est agencé de manière à émettre sur N porteuses de liaison montante et recevoir sur M porteuses de liaison descendante lors de la communication avec au moins une station de base radio, et dans lequel la somme de N et M est égale ou supérieure à trois, ledit équipement d'utilisateur étant **caractérisé en ce qu'**il comporte :
- un moyen pour recevoir (403) N commandes de contrôle TCP sur au moins l'une des M porteuses de liaison descendante à partir d'au moins une station de base radio, comprenant en outre un moyen pour recevoir à la fois la première commande et au moins une seconde commande desdites N commandes de contrôle TCP sur une première porteuse de liaison descendante, et chacune des commandes de contrôle TCP restantes sur des porteuses de liaison descendante subséquentes individuelles, à partir d'au moins une station de base radio, lorsque M est inférieur à N, et un moyen pour recevoir les N commandes de contrôle TCP sur des porteuses de liaison descendante individuelles, à partir d'au moins une station de base radio, lorsque M est supérieur ou égal à N ; et
- un moyen pour ajuster (404) la puissance d'émission des N porteuses de liaison montante sur la base des N commandes de contrôle TCP reçues.
